# EUROPÄISCHE PATENTSCHRIFT

(11) **EP 1 440 954 B1**
(45) Veröffentlichungstag und Bekanntmachung des Hinweises auf die Patenterteilung: **27.04.2005**
(21) Anmeldenummer: 03001689.3
(22) Anmeldetag: 25.01.2003
(51) Int. Cl.: C04B 22/14, C04B 28/02

(54) **Chromatreduziertes hydraulisches Bindemittel**
Chromate reduced hydraulic binder
Liant hydraulique avec une teneur en chromate réduite

(43) Veröffentlichungstag der Anmeldung: 28.07.2004
(73) Patentinhaber: Kehrmann, Alexander, 46509 Xanten (DE)
(72) Erfinder: Kehrmann, Alexander, 47053 Duisburg (DE); Paulus, Andreas, 59597 Erwitte (DE)
(74) Vertreter: Ksoll, Peter, Dr.-Ing.

(56) Entgegenhaltungen:
- WO-A-84/01942
- WO-A-84/02900
- WO-A-96/33133
- DD-A- 275 998
- DE-A- 10 014 468
- DATABASE WPI Section Ch, Week 200110 Derwent Publications Ltd., London, GB; Class L02, AN 2001-081267 XP002242148 & CN 1 145 338 A (WANG D), 19. März 1997 (1997-03-19)

## Beschreibung

Die Erfindung betrifft ein hydraulisches Bindemittel mit dem Hauptbestandteil Zement, dem zur Chromatreduzierung Eisen-(II)-sulfat zugefügt ist.

Zement kommt in der Baustoffindustrie als feingemahlenes hydraulisches Bindemittel zur Herstellung von Beton, Mörtel, Betonsteinen und Fertigteilen zur Anwendung. Hierbei wird der Zement oft in Handarbeit verarbeitet. Dies ist insofern nachteilig, weil die üblichen Zemente aufgrund ihres Chromatgehalts als Allergieauslöser für Hautekzeme, der sogenannten Maurerkrätze, gelten.

Chromathaltiger Zement enthält bis zu 100 ppm Chrom(VI)-Verbindungen (Chromate), von denen etwa 20 % löslich sind. Das lösliche Chromat ist die Ursache der allergischen Zementekzeme. Durch Einsatz chromatarmer Zemente und chromatarmer zementhaltiger Zubereitungen, beispielsweise Fliesenkleber oder Trockenmörtel, können diese Erkrankungen weitgehend eliminiert werden. Aus diesem Grund sollen zementhaltige Baustoffe, die von Hand verarbeitet werden, ausschließlich chromatarm hergestellt werden. Chromatarme Zemente enthalten weniger als 2 ppm wasserlösliches Chrom(VI) bezogen auf die Trockenmasse.

In diesem Zusammenhang ist es bekannt, den Chromatgehalt im Zement durch Zugabe eines Reduktionsmittels. nämlich Eisen-(II)-sulfat zu reduzieren. Hierzu wird dem Zement gemäß der DE 197 44 035 A1 trockenes granulatförmiges Eisen-(II)-sulfat in einer Menge von 0,01 bis 1 Gew.-% bei der Entnahme des Zements aus einem Großsilo zugegeben. Beim Anmachen der Mörtel- oder Betonmischung löst sich das granulatförmige Eisen-(II)-sulfat im Anmachwasser auf und kommt beim Vermischen mit dem Chromat(VI) in Kontakt, wodurch dieses chemisch reduziert wird.

Auch in Manns, W.; Laskowski, Ch.: Eisen-(II)-sulfat als Zusatz zur Chromatreduzierung in BE-Z: Beton, H. 2/1999, S. 78-85 wird die Verwendung von trockenem pulverförmigem Eisen-(II)-sulfat zur Chromatreduzierung beschrieben.

Trockenes Eisen-(II)-sulfat verliert jedoch durch Oxidation mit Luftsauerstoff an Wirksamkeit. Aus diesem Grund wird das Eisen-(II)-sulfat dem Zement bei den bekannten Vorschlägen auch erst bei der Entnahmen aus dem Großsilo zugegeben, um so die Gefahr einer unerwünschten Reaktion des zugemischten granulatförmigen Eisen-(II)-sulfats mit dem Zement zu verringern.

Im Umfang der DE 100 14 468 A1 ist es bekannt, bei der Herstellung eines Baustoffes aus Zement, Wasser und Zuschlagstoffen beim Anmischvorgang feuchtes Eisen-(II)-sulfat, sogenanntes Grünsalz, zuzufügen. Um das Handling des feuchten Grünsalzes zu verbesseren, wird diesem ein Trockenmittel, z.B. gemahlener Kalkstein, zugegeben.

Grundsätzlich ist aber festzustellen, dass die Reaktionsfähigkeit des Eisen-(II)-sulfats im Zement mit zunehmender Lagerungsdauer bzw. Alterung abnimmt.

Die übliche Lagerungsfähigkeit von chromatarmem Zement beträgt drei bis maximal sechs Monate. Bei Überschreiten der Verfallszeit darf der Zement im Grunde genommen nicht mehr verwendet werden, weil der Chromatanteil im Zement dann über der gesetzlich zulässigen Norm von 2 ppm liegt.

Die DD 275 998 A beschreibt ein Verfahren zur Herstellung von Zement, bei dem der hautschädigende Chrom(VI)-Gehalt bei der Herstellung vom wässrigen Zementzubereitungen vermindert oder beseitigt werden soll. Dies erfolgt durch die Zugabe von Eisen-(II)-Sulfat. Hierzu werden dem Mahtstrom vor der Zementvermahlung Stoffe zugegeben, die Eisen-(II)-Sulfat in Anteilen, von 90 Gew.% oder mehr und einen Schwefelsäureanteil von 0,5 - 5 Gew.-% aufweisen.

Der Erfindung liegt daher ausgehend vom Stand der Technik die Aufgabe zugrunde, ein anwendungstechnisch verbessertes chromatarmes hydraulisches Bindemittel mit einer höheren Lagerungs- bzw. Alterungsbeständigkeit zu schaffen.

Zwei selbstständige Lösungen dieser Aufgabe zeigt die Erfindung in den Patentansprüchen 1 und 2 auf.

Das hydraulische Bindemittel besteht aus Zement, dem eine Mischung aus feuchtem Grünsalz als Eisen-(II)-sulfat-Lieferant zusammen mit dem Säuerungsmittel und einem Trockenmittel zugefügt ist.

Gemäß Patentanspruch 1 kommt als Trockenmittel ein Silicagel zur Anwendung.

Bei Silicagel, auch Kieselgel genannt, handelt es sich um eine festamorphe Kieselsäure, deren Einsatz als Adsorptionsmittel für Gase, Dämpfe und Flüssigkeiten grundsätzlich bekannt ist. Es lässt sich mit verschiedenen Porendurchmessem herstellen. Silicagele absorbieren Feuchtigkeit auf ihrer großen inneren Oberfläche, die bis zu 800 m²/g betragen kann.

Silicagel wird synthetisch hergestellt als Kondensationsprodukt von Siliziumdioxid. Hierzu kann Natriumsilikat mit einer Mineralsäure, beispielsweise Schwefelsäure, gemischt werden. Aus diesen beiden Stoffen wird ein Sol (SiO₂, Na₂SO₄, mal H₂O) erzeugt, welches zu Gallerte erstarrt. Diese wird zerkleinert und gegebenenfalls noch nachbehandelt, um die unterschiedlichsten Eigenschaften wie Porenvolumen, Porendurchmesser und innere Oberfläche einzustellen.

Auch Tonerde, insbesondere aktive Tonerde, kann als Trockenmittel zum Einsatz gelangen, wie dies Patentanspruch 2 vorsieht. Aktivierte Tonerde ist aktiviertes Aluminiumoxid (Al₂O₃). Es handelt sich um ein natürliches Tonmaterial (Bentonit) in bröseliger Form mit ähnlichen Adsorptionseigenschaften für Feuchtigkeit, wie Silicagel.

Das hydraulische Bindemittel besteht aus Zement mit der üblichen Zugabe von Eisen-(II)-sulfat als Chromatreduzierer, wobei zusätzlich ein den pH-Wert senkendes Säuerungsmittel und ein Trockenmittel in Form von Silicagel der Tonerde zugefügt ist. Durch das Säuerungsmittel wird ein saures Milieu im Zement eingestellt. Hierdurch kann die Reaktionsfähigkeit des Eisen-(II)-sulfats und damit die Lagerungsbeständigkeit des Zements verlängert werden. Die Erfindung macht sich hierbei die Erkenntnis zu Eigen, dass der Zement als solcher basisch ist, wohingegen das Eisen-(II)-sulfat sauer ist. Mit zunehmender Lagerungsdauer findet eine Neutralisierung des Eisen-(II)-sulfats durch die basischen Komponenten, beispielsweise die Kalkkomponenten des Zements, statt. Dies wird erfindungsgemäß durch die Zugabe des Säuerungsmittels reduziert. Auf diese Weise kann die Lagerungsbeständigkeit des hydraulischen Bindemittels deutlich erhöht werden. Praktische Versuche haben gezeigt, dass die Lagerungsbeständigkeit um mehr als das Doppelte gegenüber Zementen herkömmlicher Mischung erhöht werden konnte.

Das Säuerungsmittel wird in einer Menge zwischen 0,5 Gew.% bis 10 Gew.%, vorzugsweise zwischen 1 Gew.% und 3 Gew.%, bezogen auf die Menge Eisen-(II)-sulfat zugefügt. Hierdurch kann zuverlässig das gewünschte saure Milieu des Bindernittels eingestellt werden.

Vorzugsweise weist die Mischung eine Körnung auf, deren Siebrückstand auf einem 0,2 mm Sieb kleiner oder gleich 30 % ist. Die Körnung der Mischung ist so fein, dass diese mit unterschiedlichsten Dosieraggregaten präzise und in exakt vorbestimmbaren Mengen dosiert werden kann. Auch bei der Verarbeitung, wie beispielsweise bei Verputzarbeiten, mit einem Baustoff unter Verwendung des erfindungsgemäß vorgesehenen Bindemittels erhält man einen sehr feinen, sehr gut verarbeitenden Baustoff. Nachteilige Auswirkungen aus zu groben Körnern sind unterbunden.

Die Klassierung der Mischung auf die gewünschte Korngröße bzw. Feinheit erfolgt vorzugsweise in mechanischen Bearbeitungsvorrichtungen, vorzugsweise Mühlen, wie Kugelmühlen. Die so mit verhältnismäßig geringfügigem Aufwand aufbereitete Mischung aus Grünsalz, Säuerungsmittel und Trockenmittel kann dann problemlos dem Zement zugefügt werden.

Da Eisen-(II)-sulfat von Natur aus schon Schwefelsäure enthält, kommt als Säuerungsmittel gemäß Patentanspruch 3 vorzugsweise Schwefelsäure (H₂SO₄) zur Anwendung. Die Schwefelsäure wird in flüssiger Form mit dem feuchten Grünsalz gemischt. Anschließend wird die Mischung mit dem Trockenmittel so weit aufbereitet und eingestellt, dass es dem Zement zugegeben werden kann. Die Schwefelsäure kann auch in Form ihrer Salze der Sulfate zugegeben werden.

Grundsätzlich können aber auch andere Säuerungsmittel in flüssiger oder fester Form eingesetzt werden, beispielsweise Salzsäure. Geeignet sind alle Säuerungsmittel, die den pH-Wert des Eisen-(II)-sulfats absenken. Der pH-Wert der Mischung aus Eisen-(II)-sulfat und Säuerungsmittel sollte in der Praxis unterhalb von 4, vorzugsweise zwischen 2 und 3 liegen.

Grünsalz fällt als Abfall- oder Nebenprodukt bei verschiedenen industriellen Prozessen, beispielsweise der Titandioxidherstellung aus Titanerz an. Bei der Titandioxidherstellung nach dem Sulfatverfahren wird das feingemahlene Titanerz mit konzentrierter Schwefelsäure aufgeschlossen. Das im Erz enthaltene Eisenoxid reagiert zu Eisensulfat, das Titanerz zu Titansulfat. Die Abtrennung des Eisensulfats vom Titansulfat erfolgt durch Kristallisation. Aufgrund der höheren Wasserlöslichkeit kristallisiert das Eisensulfat zu grünem Eisen-(II)-sulfat aus und kann abgetrennt werden. Dieses sogenannte Grünsalz ist mithin ein Abfallprodukt der Titandioxidherstellung. Es ist in der Konsistenz feucht, besitzt jedoch die gleichen chemischen Eigenschaften, insbesondere was die Chromat(VI)-Reduzierung anbelangt. Dabei ist Grünsalz wesentlichkostengünstiger.

Durch die Mischung des feuchten Grünsalzes als Eisen-(II)-sulfat-Lieferant mit dem Säuerungsmittel und dem Trockenmittel erhält man ein rieselfähiges Produkt. Das Trockenmittel hat innerhalb der Mischung die Funktion der Trocknung und die eines Feuchtigkeitspuffers bzw. -regulators. Die Trocknungs- und Pufferwirkung des Trockenmittels gewährleistet eine optimale Einstellung der Mischung. Die Oxidation mit Luftsauerstoff wird vermieden, ebenso wie ein Verklumpen. Eine aufwendige Aufbereitung oder Trocknung des Grünsalzes vor dessen Verarbeitung ist nicht erforderlich. Die Feuchtigkeitsregulierung übernimmt das Trockenmittel.

Als Trockenmittel kommen feinkörnige oder pulverförmige Substrate mit großer Oberflächenstruktur zur Anwendung, die hygroskopische Eigenschaften aufweisen, also Feuchtigkeit aufnehmen und auch abgeben können.

Nach den Merkmalen von Patentanspruch 4 liegt der Anteil an Trockenmittel zwischen 5 Gew.% und 15 Gew.%, insbesondere bei ca. 10 Gew.% bezogen auf die Menge des Grünsalzes. Bei diesen Anteilen wird die Funktion des Trockenmittels als Feuchtigkeitspuffer bzw. regulator zuverlässig erreicht.

Die Trocknungs- und Pufferwirkung des Trockenmittels gewährleistet eine optimale Einstellung der Mischung. Die Oxidation mit Luftsauerstoff wird vermieden, ebenso wie ein Verklumpen. Eine aufwändige Aufbereitung oder Trocknung des Grünsalzes vor dessen Verarbeitung ist nicht erforderlich. Die Feuchtigkeitsregulierung übernimmt das Trockenmittel.

Die Mischung aus Grünsalz, Säuerungsmittel und Trockenmittel wird in einer Menge zwischen 0,2 Gew.% bis 1,0 Gew.% bezogen auf die Zementmenge zugegeben (Patentanspruch 6). Hierdurch kann eine wirksame Reduktion des Chromatgehalts bis unterhalb der als gesundheitsbedenklich angesehenen Grenzwerte bewirkt werden.

Zur Einstellung der mechanischen Eigenschaften des unter Verwendung des erfindungsgemäß vorgesehenen hydraulischen Bindemittels hergestellten Baustoffes, beispielsweise des Festigkeits- oder Fließfähigkeitsverhaltens, kann die Mischung aus Grünsalz und inertem Trägermaterial noch Zuschlagstoffe enthalten, beispielsweise Zink, Aluminium, Phosphor oder Titanoxid.

Zink beispielsweise dient als Festigkeitsförderer und kommt in einer Menge von < 10 Gew.-% zum Einsatz. Phosphor hat einer verzögernde Wirkung auf die Erstarrungszeit des Zements. Auch Phosphor wird in der Regel in Mengen < 10 % eingesetzt.

## Patentansprüche

1. Hydraulisches Bindemittel mit Zement als Hauptbestandteil sowie Eisen-(II)-sulfat und einem den pH-Wert senkenden Säuerungsmittel, **dadurch gekennzeichnet, dass** das Eisen-(II)-sulfat in Form von Grünsalz zusammen mit dem Säuerungsmittel und einem Trockenmittel als Mischung zugegeben sind, wobei das Trockenmittel ein Silicagel ist und die Mischung Trockenmittel in einer Menge zwischen 5 Ges.-% bis 15 Gew.-% bezogen auf die Grünsalzmenge enthält und das Säuerungsmittel in einer Menge zwischen 0,5 Gew.-% bis 10 Gew.-%, vorzugsweise zwischen 1 Gew.-% und 3 Gew.-%, bezogen auf die Menge Eisen-(II)-sulfat zugefügt ist.

2. Hydraulisches Bindemittel mit Zement als Hauptbestandteil sowie Eisen-(II)-Sulfat und einem den pH-Wert senkenden Säuerungsmittel, **dadurch gekennzeichnet, dass** das Eisen-(II)-sulfat in Form von Grünsalz zusammen mit dem Säuerungsmittel und einem Trockenmittel als Mischung zugegeben sind, wobei das Trockenmittel Tonerde ist und die Mischung Trockenmittel in einer Menge zwischen 5 Gew.-% bis 15 Gew.-% bezogen auf die Grünsalzmenge enthält und das Säuerungsmittel in einer Menge zwischen 0,5 Gew.-% bis 10 Gew.-%, vorzugsweise zwischen 1 Gew.% und 3 Gew.-%, bezogen auf die Menge Eisen-(II)-sulfat zugefügt ist.

3. Hydraulisches Bindemittel nach Anspruch 1 oder 2, **dadurch gekennzeichnet, dass** das Säuerungsmittel Schwefelsäure ist.

4. Hydraulisches Bindemittel nach einem der Ansprüche 1 bis 3, **dadurch gekennzeichnet, dass** die Mischung Trockenmittel in einer Menge zwischen 0,2 Gew.-% bis 1,0 Gew.-% bezogen auf die Zementmenge zugegeben ist.

## Claims

1. A hydraulic binder with cement as the main constituent and iron (II) sulphate and an acidification agent which lowers the pH, **characterised in that** the iron (II) sulphate is added in the form of green salt together with the acidification agent and a drying agent as a mixture, the drying agent being a silica gel and the mixture containing drying agent in a quantity between 5% by weight to 15% by weight based on the quantity of green salt and the acidification agent being added in a quantity of between 0.5% by weight to 10% by weight, preferably between 1% by weight and 3% by weight based on the quantity of iron (II) sulphate.

2. A hydraulic binder with cement as the main constituent and iron (II) sulphate and an acidification agent which lowers the pH, **characterised in that** the iron (II) sulphate is added in the form of green salt together with the acidification agent and a drying agent as a mixture, the drying agent being alumina and the mixture containing drying agent in a quantity of between 5% by weight to 15% by weight based on the quantity of green salt and the acidification agent being added in a quantity of between 0.5% by weight and 10% by weight, preferably between 1% by weight and 3% by weight based on the quantity of iron (II) sulphate.

3. A hydraulic binder according to claim 1 or 2, **characterised in that** the acidification agent is sulphuric acid.

4. A hydraulic binder according to any one of claims 1 to 3, **characterised in that** the mixture of drying agent is added in a quantity between 0.2% by weight and 1.0% by weight based on the quantity of cement.

## Revendications

1. Liant hydraulique comportant du ciment en tant que composant principal ainsi que du sulfate de Fer (II) et un agent d'acidification faisant baisser la valeur du pH, **caractérisé en ce que** le sulfate de Fer (II) est ajouté sous la forme de vitriol conjointement avec l'agent d'acidification et un agent de siccité en tant que mélange, dans lequel l'agent de siccité est un gel de silice, et **en ce que** le mélange contient un agent de siccité dans une quantité entre 5 % en poids jusqu'à 15 % en poids, rapportés à la quantité de vitriol, et l'agent d'acidification est ajouté dans une quantité entre 0,5 % en poids jusqu'à 10 % en poids, de préférence entre 1 % en poids et 3 % en poids, rapportés à la quantité de sulfate de Fer (II).

2. Liant hydraulique comportant du ciment en tant que composant principal ainsi que du sulfate de Fer (II) et un agent d'acidification abaissant l'indice pH, **caractérisé en ce que** le sulfate de Fer (II) est ajouté sous forme de vitriol conjointement avec l'agent d'acidification et un agent de siccité en tant que mélange, dans lequel l'agent de siccité est de l'alumine, et le mélange contient l'agent de siccité dans une quantité entre 5 % en poids à 15 % en poids, rapportés à la quantité de vitriol, et l'agent d'acidification est ajouté dans une quantité entre 0,5 % en poids jusqu'à 10 % en poids, de préférence entre 1 % en poids et 3 % en poids, rapportés à la quantité de sulfate de Fer (II).

3. Liant hydraulique selon la revendication 1 ou 2, **caractérisé en ce que** l'agent d'acidification est de l'acide sulfurique.

4. Liant hydraulique selon l'une des revendications 1 à 3, **caractérisé en ce que** le mélange d'agent de siccité est ajouté dans une quantité entre 0,2 % en poids jusqu'à 1,0 % en poids, rapporté à la quantité de ciment.
